# EUROPEAN PATENT APPLICATION

(11) **EP 3 824 733 A1**
(43) Date of publication of application: **26.05.2021**
(21) Application number: 20208455.4
(22) Date of filing: 18.11.2020
(51) Int. Cl.: A01N 31/02, A01P 1/00, A01N 31/04, A01N 35/02, A01N 37/10

(54) **PRESERVATIVE AGROCHEMICAL COMPOSITIONS**

(30) Priority: 19.11.2019 BE 201905800
(71) Applicant: Minafin sprl, 1435 Mont-Saint-Guibert (BE)
(72) Inventor: VAN DER SANDE, Karen, 1435 Mont Saint Guibert (BE); NAHRWOLD, Markus, 32423 Minden (DE)
(74) Representative: Brantsandpatents bvba

(57) **Abstract**

The invention relates to an agrochemical composition blend comprising: (i) at least one unbranched C3 to C10 alkanediol or any mixture thereof, preferably 1,2-pentanediol, 1,2-octanediol or any mixture thereof in a concentration of at least 0.05 wt.%; (ii) at least one monosubstituted hydroxyl- or keto- or carboxy- C2-C4 phenylalkane in a concentration of at least 0.05 wt.%; (iii) optionally at least one organic acid in a concentration of at least 0.01 wt.%; (iv) optionally at least one preservative selected from a group consisting of alkyl parabens, preferably C1-C4 para-hydroxy benzoates, bronopol, isothiazolinones, preferably methyl-2H-isothiazol-3-on, 1,2-benzisothiazol-3(2H)-on, chlor-2-methyl-2H-isothiazol-3-on or any mixture thereof in a concentration of at most 0.1 %; (v) optionally at least one essential oil or an essential oil isolate or a component thereof in a concentration of at least 0.025 wt.%. The invention relates to the use of the agrochemical composition blend for preservation of agrochemical formulations and for controlling phytopathogenic fungi and/or phytopathogenic bacteria and/or undesired plant growth and/or undesired insect or mite attack and/or for regulating the growth of plants.

## Description

### FIELD OF THE INVENTION

The present invention pertains to the field of agrochemical compositions for controlling phytopathogens, undesired plant growth, pest control, and for regulating the growth of plants. The present invention further relates to the use of said agrochemical compositions for controlling phytopathogenic fungi and/or phytopathogenic bacteria and/or undesired plant growth and/or undesired insect or mite attack and/or for regulating the growth of plants. More particularly, the present invention relates to green, safe and environmentally friendly agrochemical compositions and the uses thereof.

### BACKGROUND

The use of preservatives in agrochemical preparations has been known for a long time. Without the addition, or with an insufficient addition, of preservatives, various problems result, mainly due to the growth of microorganisms: evolution of gas, so that the plastic canisters or metal barrels with the agrochemical compositions might burst; development of unpleasant odors which, in insecticidal or rodenticidal compositions, might lead to a repellent effect on the insects or rodents; discolorations; pH changes, to which some pesticides are sensitive; changes in the viscosity caused by the degradation of polysaccharide-comprising thickeners, so that problems might arise upon spray application; or phase separation or sedimentation of emulsions or suspensions as the result of microbial degradation of surfactants, which might lead to problems when making up the tank mix and applying the same.
The abovementioned problems reduce in particular the storage stability of the agrochemical preparations since the latter are usually not stored in spaces with a controlled environment, but in the open. In theory, agrochemical compositions might be stabilized for a long period of time by the addition of high concentrations of preservatives, so that the abovementioned problems are minimized. However, the most commonly used preservatives, such as para-hydroxybenzoic acid and its esters, formaldehyde-releasing agents, chlorhexidine, benzalkonium chloride, propionic acid, phenoxyethanol are suspected of being allergenic or toxic.
WO 2003/069994 discloses the use of a mixture of two, three or more unbranched 1,2-alkanediols as antimicrobial active substance. By way of further component in the mixture, it is possible to employ an antimicrobial active substance in an amount whereby the antimicrobial activity of the alkanediol mixture is increased synergistically.
WO2010124973 is directed to an agrochemical composition containing pesticide, preservative and unbranched 1, 2-alkanediol having 5 to 10 carbon atoms. In a preferred embodiment, said unbranched 1,2 alkanediol is 1,2-pentanediol in a concentration from 0.5 wt.% to 3.0 wt.%. Regarding a preservative, a mixture of 2-methyl-2H-isothiazol-3-On (MIT) and either 1,2-benzisothiazol-3(2H)-on (BIT) or chlor-2-methyl-2H-isothiazol-3-on (CIT) is used in the weight ratio of MIT to either BIT or CIT ranging from 5:1 and 1:5. Said preservative is used in a concentration below 0.5 wt.%.
WO2009099419 relates to antimicrobial compositions comprising one or more acids and one or more organic diols. Said compositions are useful as antimicrobials in applications to a variety of surfaces, including agricultural products and inanimate objects.

There remains a need for a safer agrochemical composition preferably obtainable without using hazardous preservatives, which will pose less risk to the humans and environment and at the same time be more efficient than the known agrochemical preservatives on the market. There remains a need for improved preservative blends which are greener and obtainable from renewable biological sources without using very toxic and dangerous chemical synthesis.

The present invention aims to resolve at least some of the problems and disadvantages mentioned above.

### SUMMARY OF THE INVENTION

The present invention and embodiments thereof serve to provide a solution to less toxic, more environmentally friendly and greener agrochemicals. To this end, a first aspect of the present invention relates to an agrochemical composition blend comprising:
(i) at least one unbranched C3 to C10 alkanediol or any mixture thereof, preferably 1,2-pentanediol, 1,2-octanediol or any mixture thereof in a concentration of at least 0.05 wt.%;
(ii) at least one monosubstituted hydroxyl- or keto- or carboxy- C2-C4 phenylalkane in a concentration of at least 0.05 wt.%;
(iii) optionally at least one organic acid in a concentration of at least 0.01 wt.%;
(iv) optionally at least one preservative selected from a group consisting of alkyl parabens, preferably C1-C4 para-hydroxy benzoates and for example methyl para-hydroxy benzoate and propyl para-hydroxy benzoate, bronopol, isothiazolinones, preferably methyl-2H-isothiazol-3-on (MIT), 1,2-benzisothiazol-3(2H)-on (BIT), chlor-2-methyl-2H-isothiazol-3-on (CMIT) or any mixture thereof in a concentration of at most 0.1 wt.%;
(v) optionally at least one essential oil or an essential oil isolate or a component thereof in a concentration of at least 0.025 wt.%.

The term "essential oil" as used herein means a concentrated hydrophobic liquid containing volatile (easily evaporated at normal temperatures) chemical compounds from plants. Essential oils are also known as volatile oils, ethereal oils, aetherolea, or simply as the oil of the plant from which they were extracted. An essential oil is "essential" in the sense that it contains the "essence of" the plant's fragrance-the characteristic fragrance of the plant from which it is derived. Essential oils are generally extracted by distillation, often by using steam, but could be obtainable by any suitable extraction process, using a solvent, pressing the biological material, and the like.
The term "essential oil isolate", as used herein means an isolated parts or fractions of the essential oil. They may be used to enhance the specific biological activity, to achieve a certain chemical or physical property or to enhance the aroma of a certain product.
The term "essential oil component", as used herein means an isolated component of the essential oil, i.e. terpene, terpenoid or phenylalkane derivative.
The term "terpenes" as used herein, refers to a large and diverse class of organic compounds, produced by a variety of plants. Terpenes are derived biosynthetically from units of isoprene, which has the molecular formula C5H8. The basic molecular formula of terpenes are multiples of that, (C5H8)n where n is the number of linked isoprene units. "Monoterpenes" consist of two isoprene units and have the molecular formula C10H16. "Sesquiterpenes" consist of three isoprene units and have the molecular formula C15H24. Terpenes can be (multi)cyclic.
As used herein, the term "terpenoids" refers to a diverse class of organic compounds which are similar to terpenes but contain functional groups. Terpenes are hydrocarbons, whereas terpenoids contain additional functional groups. Terpenoids can be multicyclic.

The agrochemical composition blends of the invention and the use thereof reduce or eliminate the use or generation of substances hazardous to humans, animals, plants, and the environment. The constituents of said agrochemical composition blends are bio-based and obtained from sustainable, biological sources. Since the constituents of the agrochemical composition blends are obtained from biobased sources, the compositions of the invention minimize the generation of hazardous substances or dangerous experimental conditions, compared to known blends obtained via traditional organo-synthetic route. Moreover, since the agrochemical composition blends require only optionally preservatives such as BIT, they are suitable alternatives to other known preservation blends. Moreover, the preservatives such as MIT and BIT are not always effective in the doses used in the traditional agrochemical compositions, can be toxic to humans and animals and pose a risk to the environment. Finally, the agrochemical composition blends of the invention can be at least partly composed of naturally derived products from the sources such as sugar cane, bagasse and essential oils, and products based on green chemistries naturally derived and only partially synthetic.

In a second aspect, the present invention relates to an agrochemical formulation, comprising an agrochemical composition blend according to the first aspect of the present invention, and further comprising one or more additional components selected from the group comprising other additives such as herbicides, insecticides, fungicides, biocides or other active pesticide ingredients, safeners, antioxidants, chemical stabilizers, adhesives, fertilizers, perfumes, colorants, liquid carriers, solid carriers, surface-active agents, crystallisation inhibitors, viscosity modifiers, suspending agents, spray droplet modifiers, pigments, foaming agents, light-blocking agents, compatibility agents, antifoam agents, sequestering agents, neutralising agents and buffers, wetting and dispersing agents, preservatives, thickening agents, corrosion inhibitors, freezing point depressants, odorants, spreading agents, emulsifiers, oils, solvents, penetration aids, micronutrients, emollients, lubricants, sticking agents and humectants.

In a third aspect, the invention relates to the use of an agrochemical composition blend according to the first aspect of the present invention for preservation of agrochemical formulations.

The use according to the third aspect of the invention employs greener and natural and less hazardous chemical constituents, safer methods of obtaining thereof, safer solvents and reaction conditions, use of the renewable, natural feedstock, reduce derivatives, and less pollution to the environment.

In a fourth aspect, the present invention relates to a use of an agrochemical composition blend according to the first aspect of the present invention in recipies or formulations used for controlling phytopathogenic fungi and/or phytopathogenic bacteria and/or undesired plant growth and/or undesired insect or mite attack and/or for regulating the growth of plants.

### DETAILED DESCRIPTION OF THE INVENTION

The present invention concerns agrochemical composition blends based on naturally derived products, optionally obtainable from sustainable and renewable natural sources. The agrochemical composition blends of the invention do not require synthetic preservative compounds such as benzisothiazolinone biocides, nor complex and hazardous synthesis thereof.
In a first aspect, the present invention concerns an agrochemical composition blend comprising at least one unbranched C3 to C10 alkanediol and at least one monosubstituted hydroxyl- or keto- or carboxy- C2-C4 phenylalkane, and optionally: at least one organic acid,
at least one preservative selected from a group consisting of alkyl parabens, preferably C1-C4 para-hydroxy benzoates and for example methyl para-hydroxy benzoate and propyl para-hydroxy benzoate, bronopol, isothiazolinones, preferably methyl-2H-isothiazol-3-on (MIT), 1,2-benzisothiazol-3(2H)-on (BIT), or chlor-2-methyl-2H-isothiazol-3-on (CMIT) or any mixture thereof, and at least one essential oil or an essential oil isolate or a component thereof. The composition of the invention is comprised of green and safer components, mainly derived from natural and renewable sources. Furthermore, the invention relates to a use of said agrochemical composition blend in recipies or formulations used for controlling phytopathogenic fungi and/or bacteria and/or undesired plant growth and/or undesired insect or mite attack and/or for regulating the growth of plants, and to a use of the composition for controlling undesired insect or mite attack on plants and/or for controlling phytopathogenic fungi and/or for controlling undesired plant growth, where seeds of useful plants are treated with the composition, and, finally, to seed, treated with the composition.
In another aspect, the present invention relates to the use of the agrochemical composition blends for various applications.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a product" refers to one or more than one product.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.
The recitation of numerical ranges by endpoints includes all numbers and fractions subsumed within that range, as well as the recited endpoints.
The expression "% by weight", "weight percent", "%wt" or "wt.%", here and throughout the description unless otherwise defined, refers to the relative weight of the respective component based on the overall weight of a composition, composition blend or formulation comprising said component.
Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.
Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.
Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a first aspect, the present invention concerns an agrochemical composition blend comprising:
(i) at least one unbranched C3 to C10 alkanediol or any mixture thereof, preferably 1,2-pentanediol, 1,2-octanediol or any mixture thereof in a concentration of at least 0.05 wt.%;
(ii) at least one monosubstituted hydroxyl- or keto- or carboxy- C2-C4 phenylalkane represented by a formula 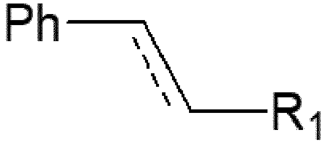 wherein "----" is a single or a double bond, wherein Ph is a phenyl group and wherein R1 is chosen from the group comprising the following substituents -OH, = O, -CH₂-OH, -C=O, -CH₂-C=O, -CH₂-CH₂-OH, - CH₂-COOH, and -COOH and wherein at least one monosubstituted hydroxyl- or keto- or carboxy- C2-C4 phenylalkane is in a concentration of at least 0.05 wt.%;
(iii) optionally at least one organic acid in a concentration of at least 0.01 wt.%;
(iv) optionally at least one preservative selected from a group consisting of alkyl parabens, preferably C1-C4 para-hydroxy benzoates and for example methyl para-hydroxy benzoate and propyl para-hydroxy benzoate, bronopol, isothiazolinones, preferably methyl-2H-isothiazol-3-on (MIT), 1,2-benzisothiazol-3(2H)-on (BIT), chlor-2-methyl-2H-isothiazol-3-on (CMIT) or any mixture thereof in a concentration of at most 0.1 wt.%;
(v) optionally at least one essential oil or an essential oil isolate or a component thereof in a concentration of at least 0.025 wt.%.

The agrochemical composition blend of the invention comprises at least one unbranched 1,2-alkanediol having 3 to 10 carbon atoms. Preferred unbranched 1,2-alkanediols having 3 to 10 carbon atoms are 1,2-propanediol i.e. propyleneglycol, 1,2-butanediol, 1,2-pentanediol, 1,2-hexanediol, 1,2-octanediol and 1,2-decanediol.

In a preferred embodiment, said at least one C3 to C10 unbranched alkanediol is 1,2-pentanediol. 1,2-pentanediol is commercially available in various degrees of purity, for example of at least 70% by weight to at least 99.95% by weight. The 1,2-pentanediol comprised in the agrochemical blends of the invention is preferably of a natural origin, i.e. obtainable by processing of furfural obtainable from biomass. Such 1,2-pentanediol is a polar solvent characterized by a good miscibility with water but also with a wide spectrum of other commercially employed solvents. It possesses good solubility in hydrophilic compounds used for or obtained by extraction, similar to some other solvents such as ethanol or glycerin. Moreover, the use of 1,2-pentanediol is advantageous because it stabilizes hydrophilic and hydrophobic ingredients, so it is suitable for complex mixtures. It is further characterized by a high flash point of about 105 °C, high boiling point of about 206 °, so it allows for extraction at higher temperatures. Moreover, 1,2-pentanediol has antimicrobial properties when used in water based formulations. Thus, 1,2-pentanediol is not just a solvent, but also an antimicrobial agent in the agrochemical composition blends of the invention.
In another preferred embodiment, said at least one unbranched C3 to C10 alkanediol is 1,2-octanediol. 1,2-octanediol is shown to be a good antimicrobial agent in personal care and other applications. 1,2-octanediol used in the agrochemical composition blend of the invention is optionally a green product, obtainable from natural sources.
In another preferred embodiment, said agrochemical composition blend comprises at least two unbranched C3 to C10 alkanediols. In a further preferred embodiment, said at least two unbranched alkanediols are 1,2-pentanediol and 1,2-octanediol. 1,2-pentanediol and 1,2-octanediol used in the agrochemical composition blends of the invention are advantageous over the known preservatives in agrochemicals for their low toxicity and high degree of biodegradability. Thus, they can be particularly suitable for agrochemical applications which require green and natural based formulation solutions. Said blends comprising both 1,2-pentanediol and 1,2-octanediol are particularly suitable for biostimulant formulations (such as aminoacids and the like) and suspending aids such as polysaccharide thickeners, for example guar gum or xanthan gum, that are susceptible to bacterial growth.

The said unbranched C3 to C10 alkanediols are advantageous for use in the agrochemical composition blends of the invention because they are not hazardous to the environment, they ensure better protection for agricultural crops and they can be biobased molecules, thus they can be suitable also for the crops with a green label.

The agrochemical composition blend according to the invention comprises from at least 0.05 wt.%, preferably at least 0.1 wt.%, more preferably at least 0.5 wt.%, most preferably at least 1.0 wt.% and at most 95.0 wt.%, preferably at most 80.0 wt.%, most preferably at most 75.0 wt.% of said at least one unbranched C3 to C10 alkane diol or any mixture thereof, preferably 1,2-pentanediol, 1,2-octanediol or any mixture thereof.

The use of preservatives in agrochemical preparations has been known for a long time. Without the addition, or with an insufficient addition, of preservatives, various problems result, mainly due to the growth of microorganisms: evolution of gas, so that the plastic canisters or metal barrels with the agrochemical compositions might burst; development of unpleasant odors which, in insecticidal or rodenticidal compositions, might lead to a repellent effect on the insects or rodents; discolorations; pH changes, to which some pesticides are sensitive; changes in the viscosity caused by the degradation of polysaccharide-comprising thickeners, so that problems might arise upon spray application; or phase separation or sedimentation of emulsions or suspensions as the result of microbial degradation of surfactants, which might lead to problems when making up the tank mix and applying the same. However, traditionally used preservatives such as benzisothiazolinone biocides are used in the compositions known in the prior art, but often are not adequate and safe at highest doses use. Moreover, recently a major global shortage of 1,2-benzisothiazolin-3-one is reported, which urges to pursue the search for safer, more green and eco-friendly alternatives for agrochemical compositions. 1,2-Benzisothiazolin-3-one may be corrosive to metals, and is very harmful if swallowed, in contact with skin causes severe skin burns and eye damage, may cause an allergic skin reaction, causes a serious eye damage, may cause respiratory irritation. If spilled in the environment, it represents a potent marine pollutant. The agrochemical composition blends of the invention are shown to possess preservative characteristics even without addition of synthetic and hazardous preservative compounds such as 1,2-benzisothiazolin-3-one. Thus, the agrochemical composition blends are safer and green alternative to known agrochemical compositions comprising the synthetic preservatives such as, but not limited to 1,2-benzisothiazolin-3-one.
Said agrochemical composition blend comprises at least one monosubstituted hydroxyl- or keto- or carboxy- C2-C4 phenylalkane in a concentration of at least 0.05 wt.%. The general formula of hydroxyl- or keto- or carboxy- C2-C4 phenylalkane is 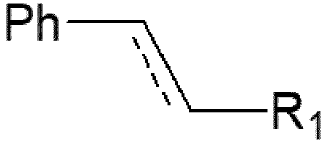 wherein "-----" is a single or a double bond, wherein Ph is a phenyl group and wherein R1 is chosen from the group comprising the following substituents -OH, = O, -CH₂-OH, -C=O, -CH₂-C=O, -CH₂-CH₂-OH, - CH₂-COOH, and -COOH.

In a preferred embodiment, said monosubstituted hydroxyl- or keto- or carboxy-C2-C4 phenylalkane is chosen from a group comprising:

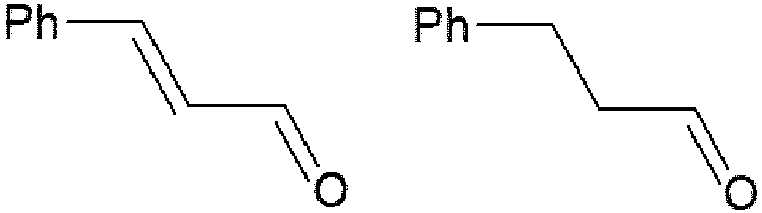

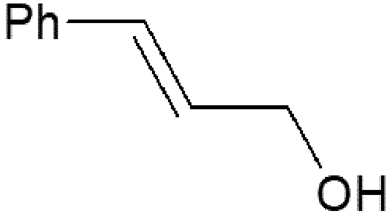

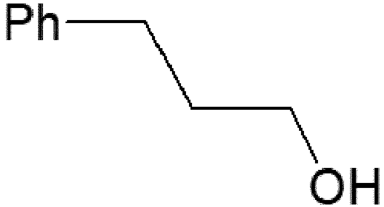

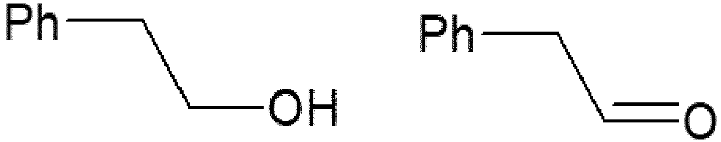

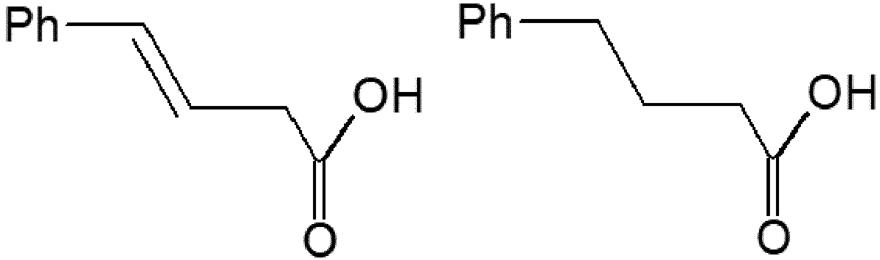

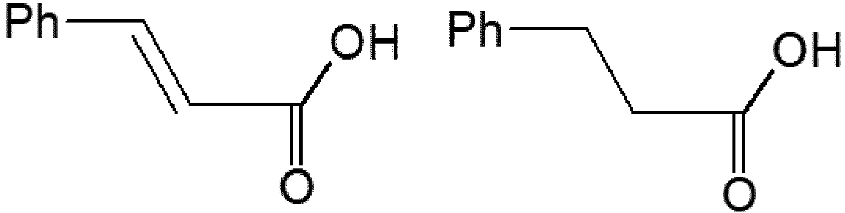

In a further preferred embodiment, said at least one monosubstituted hydroxyl- or keto- or carboxy- C2-C4 phenylalkane is a phenylalcohol. In a further preferred embodiment, said phenylalcohol is 3-phenyl-1-propanol.

In another preferred embodiment, said at least one monosubstituted hydroxyl- or keto- or carboxy- C2-C4 phenylalkane is a phenylalkyl aldehyde. In a further preferred embodiment, said phenylalkyl aldehyde is cinnamaldehyde.

The agrochemical composition blend according to the invention comprises from at least 0.05 wt.%, preferably at least 0.1 wt.%, more preferably at least 0.5 wt.%, most preferably at least 1.0 wt.% and at most 95.0 wt.%, preferably at most 80.0 wt.%, even more preferably at most 70.0 wt.%, yet even more preferably at most 60.0 wt.%, most preferably at most 55.0 wt.% of said at least one monosubstituted hydroxyl- or keto- or carboxy- C2-C4 phenylalkane, preferably phenylalcohol, most preferably 3-phenyl-1-propanol and/or preferably phenylalkyl aldehyde, most preferably cinnamaldehyde.

In a preferred embodiment, the agrochemical composition blend according to the invention comprises a combined amount of at least 0.1 wt.% of (i) said at least one unbranched C3 to C10 alkane diol or any mixture thereof, preferably 1,2-pentanediol, 1,2-octanediol or any mixture thereof and (ii) said at least one monosubstituted hydroxyl- or keto- or carboxy- C2-C4 phenylalkane, preferably phenylalcohol, most preferably 3-phenyl-1-propanol.

In a preferred embodiment, the agrochemical composition blend comprises citric acid as at least one organic acid.
It should be understood by a skilled person that other part of organic acids may be suitable ingredients of the agrochemical composition blends of the invention without departing from the scope of the invention. Some non-limiting examples are acetic acid, formic acid, lactic acid, oxalic acid, malic acid and the like.
The agrochemical composition blend of the invention comprises said at least one organic acid in a concentration of at least 0.01 wt.%, preferably of at least 0.05 wt.%, more preferably at least 0.1 wt.%, and preferably of at most 55 wt.%, more preferably at most 50 wt.%, even more preferably at most 20 wt.%, even more preferably at most 2.00 wt.%, yet even more preferably at most 1.00 wt.%, and yet even more preferably at most 0.5 wt.%. In a preferred embodiment, said at least one organic acid is present in concentration of about 0.2 wt.% without departing from the scope of the invention.
In another embodiment, the agrochemical composition blend of the invention comprises optionally preservative, preferably a green and eco-friendly preservative. Some non-limiting examples of said preservatives are benzoic acid, its esters and salts, para-hydroxybenzoic acid (paraben), its esters and salts, propionic acid and its salts, salicylic acid and its salts, 2,4-hexadienoic acid (sorbic acid) and its salt, formaldehyde and paraformaldehyde, 2-hydroxybiphenyl ether and its salts, 2-zincsulfidopyridine N-oxide, inorganic sulfites and bisulfites, sodium iodate, chlorobutanol, dehydroacetic acid and its salts, formic acid, 1,6-bis(4-amidino-2-bromophenoxy)-n-hexane and its salts, 10-undecylenic acid and its salts, 5-amino-1,3-bis(2-ethylhexyl)-5-methylhexahydropyrimidine, 5-bromo-5-nitro-1,3-dioxane, 2-bromo-2-nitropropane-1,3-diol, 2,4-dichlorobenzyl alcohol, N-(4-chlorophenyl)-N'-(3,4-dichlorophenyl)urea, 4-chloro-m-cresol, 2,4,4'-trichloro-2'-hydroxydiphenyl ether, 4-chloro-3,5-dimethylphenol, 1,1'-methylene-bis(3-(1-hydroxymethyl-2,4-dioximidazolidin-5-yl)urea), poly(hexamethylenediguanide) hydrochloride, 2-phenoxyethanol, hexamethylenetetramine, 1-(3-chloroallyl)-3,5,7-triaza-1-azonia-adamantane chloride, 1(4-chlorophenoxy)-1-(1H-imidazol-1-yl)-3,3-dimethyl-2-butanone, 1,3-bis(hydroxymethyl)-5,5-dimethyl-2,4-imidazolidinedione, benzyl alcohol, octopirox, 1,2-dibromo-2,4-dicyanobutane, 2,2'-methylenebis(6-bromo-4-chlorophenol), bromochlorophene, dichlorophene, 2-benzyl-4-chlorophenol, 2-chloroacetamide, chlorhexidine, chlorhexidine acetate, chlorhexidine gluconate, chlorhexidine hydrochloride, 1-phenoxypropan-2-ol, N-alkyl(C12-C22)trimethylammonium bromide and chloride, 4,4-dimethyl-1,3-oxazolidine, N-hydroxymethyl-N-(1,3-di(hydroxymethyl)-2,5-dioxoimidazolidin-4-yl)-N'-hydroxymethylurea, 1,6-bis(4-amidinophenoxy)-n-hexane and its salts, glutaraldehyde, 5-ethyl-1-aza-3,7-dioxabicyclo(3.3.0)octane, 3-(4-chlorophenoxy)propane-1,2-diol, Hyamine, alkyl(C8-C18)dimethylbenzylammonium chloride, alkyl(C8-C18)dimethylbenzylammonium bromide, alkyl(C8-C18)dimethylbenzylammonium saccharinate, benzyl hemiformal, 3-iodo-2-propynyl butylcarbamate, sodium hydroxymethylaminoacetate, cetyltrimethylammonium bromide, cetylpyridinium chloride, and derivatives of 2H isothiazol-3-one (so-called isothiazolone derivatives) such as alkylisothiazolones (for example 2-methyl-2H-isothiazol-3-one, MIT; chloro-2-methyl-2H-isothiazol-3-one, CIT), benzoisothiazolones (for example 1,2-benzoisothiazol-3(2H)-one, BIT) or 2-methyl-4,5-trimethylene-2H-isothiazol-3-one (MTIT), and mixtures of these. Preferred preservatives are propionic acid and its salts, sorbic acid and its salts, benzoic acid, its esters and salts, para-hydroxybenzoic acid and its salts, C1-C4-alkyl para-hydroxybenzoate (alkylparabens) and isothiazolone derivatives and their mixtures, 2-phenoxyethanol, cetyltrimethylammonium bromide, cetylpyridinium chloride, benzyl hemiformal and dichlorophene. Especially preferred are C1-C4-alkyl para-hydroxybenzoate (alkylparabens) and isothiazolone derivatives and their mixtures, and 2-phenoxyethanol.
In a preferred embodiment, the agrochemical composition blend of the invention comprises at least one preservative selected from the group of alkyl parabens, preferably C1-C4 para-hydroxy benzoates and for example methyl para-hydroxy benzoate and propyl para-hydroxy benzoate, bronopol, isothiazolone derivatives and their mixtures, such as alkyl isothiazolones (for example MIT, CMIT), benzoisothiazolones (for example BIT), MTIT, mixtures of MIT and CIT or of MIT and BIT. Very especially preferred are mixtures of isothiazolone derivatives, such as mixtures of MIT and CIT or of MIT and BIT, specifically of MIT and BIT.
The preservative concentration to be used in the composition according to the invention therefore also depends on the preservative employed in each case, but it is generally lower than recommended by the manufacturer of the preservative, or in the lower range of the manufacturer's recommendation. The skilled worker can determine a suitable concentration of the preservative in simple preliminary experiments: to this end, the shelf life of a composition without addition of 1,2-alkanediol and with addition of alkanediol and reduced preservative concentrations is tested. Then, the reduced preservative concentration which has an equally long shelf life as the composition without alkanediol is selected. In general, the composition according to the invention comprises at most 0.1 wt.% of said at least one preservative selected from the group of isothiazolinones, preferably at most 0.05 wt.% of said at least one preservative, based on the mass of the composition. In the case of preservative mixtures, the concentration data relates to the total of all preservatives. In the case of dilute aqueous preservatives, or preservatives which have been formulated in other ways, the concentration data relates to the pure preservatives. If MIT and CMIT are selected among the preservatives, the combined amount of MIT and CMIT is preferably at most 0.0022 wt.%. If BIT and MIT are selected among the preservatives, the combined amount of BIT and MIT is preferably at most 0.025 wt.%. If bronopol is a selected at least one preservative, the amount of bronopol is preferably at most 0.04 wt.%.
In another preferred embodiment, the agrochemical composition blend of the invention further comprises at least one essential oil, essential oil isolate or an isolated essential oil compound. It should be understood by a skilled person that various essential oils may be suitable for the agrochemical composition blend of the invention. In a preferred embodiment, the agrochemical composition blend of the invention comprises at least one essential oil, essential oil isolate or a component thereof from the plant species chosen from the group comprising *Cinnamomum verum, Cinnamomum cassia, Citrus aurantium, Citrus glauca, Citrus limon, Citrus maxima, Citrus reticulata, Eucalyptus globulus, Eucalyptus calmendulensis, Melaleuca bracteata, Thymus serpyllum, Thymus vulgaris,* and *Citronella sp.* and the like. In a further preferred embodiment, said essential oil, essential oil isolate or a component thereof is isolated from the plant species chosen from the group consisting of *Citrus aurantium, Citrus maxima, Citrus reticulata, Cinnamomum verum, Cinnamomum cassia, Eucalyptus globulus, Eucalyptus calmendulensis, Citrus glauca, Melaleuca bracteata, Thymus vulgaris* and *Citronella sp.* Non-limiting examples of suitable essential oils are thymus essential oils, cassia essential oils, eucalyptus essential oils and citronella.
Some non-limiting examples for compounds isolated from essential oils are cinnamaldehyde, thymol, menthol, menthone, caryophyllene, caryophyllene oxide, bisabolol, chamazulene, limonene, citronellal, citronellol, linalool, tetrahydrolinalool, vanillin, isopropyl myristate, piperonal, geraniol, citral, gamma-terpinene, alpha-pinene, beta-pinene, alpha-terpineol, terpinolene, para-cymene, trans-anethole, linalyl acetate, camphene, terpinene-4-ol, alpha-terpinene, borneol, camphene, geranyl-acetate, geraniol, nerol, nerol-acetate isoborneol, 2-methyl 1,3-cyclohexadiene, myrcene, and the like.
The agrochemical composition blend of the invention comprises said at least one essential oil, essential oil isolate or a component thereof in a concentration of at least 0.025 wt.%, preferably of at least 0.05 wt.% and preferably at most 15.0 wt.%, more preferably at most 10.0 wt.%, even more preferably at most 5.0 wt.%, even more preferably at most 0.30 wt.%, yet even more preferably at most 0.20 wt.%, yet even more preferably at most 0.15 wt.%.

In preferred embodiments, the agrochemical composition blend of the invention comprises water in a concentration of at least 0.1 wt.%, more preferably at least 5.0 wt.%, more preferably at least 10.0 wt.%, even more preferably of at least 15.0 wt.%, and most preferably of at least 20.0 wt.%. It should be understood by a skilled person that any kind of water may be used in the agrochemical composition blend without departing from the scope of the invention.
In a second aspect, the present invention relates to an agrochemical formulation, comprising an agrochemical composition blend according to the first aspect of the present invention, and further comprising one or more additional components selected from the group comprising other additives such as herbicides, insecticides, fungicides, biocides or other active pesticide ingredients, safeners, antioxidants, chemical stabilizers, adhesives, fertilizers, perfumes, colorants, liquid carriers, solid carriers, surface-active agents, crystallisation inhibitors, viscosity modifiers, suspending agents, spray droplet modifiers, pigments, foaming agents, light-blocking agents, compatibility agents, antifoam agents, sequestering agents, neutralising agents and buffers, wetting and dispersing agents, preservatives, thickening agents, corrosion inhibitors, freezing point depressants, odorants, spreading agents, emulsifiers, oils, solvents, penetration aids, micronutrients, emollients, lubricants, sticking agents and humectants.
Some non-limiting examples of said additional ingredients are fungicides, insecticides, rodenticides and herbicides, insecticides, rodenticides and herbicides being particularly preferred. Mixtures of pesticides of two or more of the abovementioned classes may also be used. The skilled worker is familiar with such pesticides, which can be found, for example, in Pesticide Manual, 14th Ed. (2006), The British Crop Protection Council, London. Suitable insecticides are insecticides from the class of the carbamates, organophosphates, organochlorine insecticides, phenylpyrazoles, pyrethroids, neonicotinoids, spinosins, avermectins, milbemycins, juvenile hormone analogs, alkyl halides, organotin compounds, nereistoxin analogs, benzoylureas, diacylhydrazines, METI acaricides, and insecticides such as chloropicrin, pymetrozine, flonicamid, clofentezine, hexythiazox, etoxazole, diafenthiuron, propargite, tetradifon, chlorfenapyr, DNOC, buprofezin, cyromazine, amitraz, hydramethylnon, acequinocyl, fluacrypyrim, rotenon, or their derivatives. Suitable fungicides are fungicides from the classes dinitroanilines, allylamines, anilinopyrimidines, antibiotics, aromatic hydro-carbons, benzenesulfonamides, benzimidazoles, benzoisothiazoles, benzophenones, benzothiadiazoles, benzotriazines, benzylcarbamates, carbamates, carboxamides, carboxylic acid amides, chloronitriles, cyanoacetamide oximes, cyanoimidazoles, cyclopropanecarboxamides, dicarboximides, dihydrodioxazines, dinitrophenyl crotonates, dithiocarbamates, dithiolanes, ethylphosphonates, ethylaminothiazolecarboxamides, guanidines, hydroxy-(2-amino-)pyrimidines, hydroxyanilides, imidazoles, imidazolinones, inorganic substances, isobenzofuranones, methoxyacrylates, methoxycarbamates, morpholines, N-phenylcarbamates, oxazolidinediones, oximinoacetates, oximinoacetamides, peptidylpyrimidine nucleosides, phenyl-acetamides, phenylamides, phenylpyrroles, phenylureas, phosphonates, phosphorothiolates, phthalamic acids, phthalimides, piperazines, piperidines, propionamides, pyridazinones, pyridines, pyridinylmethylbenzamides, pyrimidinamines, pyrimidines, pyrim idinonehydrazones, pyrroloquinolinones, quinazolinones, quinolines, quinones, sulfamides, sulfamoyltriazoles, thiazole-carboxamides, thiocarbamates, thiophanates, thiophenecarboxamides, toluamides, triphenyltin compounds, triazines, triazoles, and non-limiting examples of fungicides are pyraclostrobin, metconazole and epoxiconazole. Suitable herbicides are herbicides from the classes of acetamides, amides, aryloxyphenoxypropionates, benzamides, benzofuran, benzoic acids, benzothiadiazinones, bipyridyliurn, carbamates, chloroacetamides, chlorocarboxylic acids, cyclohexanediones, dinitroanilines, dinitrophenol, diphenyl ethers, glycines, imidazolinones, isoxazoles, isoxazolidinones, nitriles, N-phenylphthalimides, oxadiazoles, oxazolidinediones, oxyacetamides, phenoxycarboxylic acids, phenyl-carbamates, phenylpyrazoles, phenylpyrazolines, phenylpyridazines, phosphinic acids, phosphoroamidates, phosphorodithioates, phthalamates, pyrazoles, pyridazinones, pyridines, pyridinecarboxylic acids, pyridinecarboxamides, pyrimidinediones, pyrimidinyl(thio)benzoates, quinolinecarboxylic acids, semicarbazones, sulfonylaminocarbonyltriazolinones, sulfonylureas, tetrazolinones, thiadiazoles, thiocarbamates, triazines, triazinones, triazoles, triazolinones, triazolocarboxamides, triazolopyrimidines, triketones, uracils, ureas. Suitable classes of rodenticides comprise anticoagulants, for example coumarin derivatives such as flocoumafen and difenacoum, inorganic rodenticides, organochlorine rodenticides, organophosphorus rodenticides, pyrimidinamine rodenticides, thiourea rodenticides, urea rodenticides. Ergocalciferol or vitamin D3 are non-limiting examples of suitable rodenticides.
In a preferred embodiment, the agrochemical formulation according to the second aspect of the present invention comprises formulation adjuvants, the choice of the adjuvants usually depending on the specific use form or on the active ingredient. Examples of suitable adjuvants are solvents, solid carriers, surface-active substances (such as surfactants, solubilizers, protective colloids, wetters and stickers), organic and inorganic thickeners, antifreeze agents, antifoams, optionally colorants and adhesives (for example for the treatment of seeds) or bait materials and attractants (for example for bait).
Suitable surface-active substances (adjuvants, wetters, stickers, dispersants or emulsifiers) are the alkali metal, alkaline earth metal and ammonium salts of aromatic sulfonic acids, for example of ligno-, phenol-, naphthalene- (and dibutylnaphthalenesulfonic acid, and of fatty acids, alkyl- and alkylarylsulfonates, alkyl sulfates, lauryl ether sulfates and fatty alcohol sulfates, and salts of sulfated hexa-, hepta- and octadecanols and of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl- or nonylphenol, alkylphenyl polyglycol ethers, tributylphenyl polyglycol ethers, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignin-sulfite waste liquors, and proteins, denatured proteins, polysaccharides (for example methylcellulose), hydrophobically modified starches, polyvinyl alcohol (Mowiol® types, Clariant, Switzerland), polycarboxylates (Sokalan® types, BASF, Germany), polyalkoxylates, polyvinylamine (Lupamin® types, BASF, Germany), polyethyleneimine (Lupasol® types, BASF, Germany), polyvinylpyrrolidone, and their copolymers.
Surfactants which are particularly suitable are anionic, cationic, nonionic and amphoteric surfactants, block polymers and polyelectrolytes. Suitable anionic surfactants are alkali metal, alkaline earth metal or ammonium salts of sulfonates, sulfates, phosphates or carboxylates. Examples of sulfonates are alkylarylsulfonates, diphenylsulfonates, alpha-olefinsulfonates, sulfonates of fatty acids and oils, sulfonates of ethoxylated alkylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates and carboxylated alcohol or alkylphenol ethoxylates.
Suitable nonionic surfactants are alkoxylates, N-alkylated fatty acid amides, amine oxides, esters or sugar-based surfactants. Examples of alkoxylates are compounds such as alcohols, alkylphenols, amines, amides, arylphenols, fatty acids or fatty acid esters which have been alkoxylated. Ethylene oxide and/or propylene oxide may be employed for the alkoxylation, preferably ethylene oxide. Examples of N-alkylated fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Suitable cationic surfactants are quaternary surfactants, for example quaternary ammonium compounds with one or two hydrophobic groups, or salts of long-chain primary amines. Suitable amphoteric surfactants are alkylbetaines and imidazolines. Suitable block polymers are block polymers of the A-B or A-B-A type comprising blocks of polyethylene oxide and polypropylene oxide or of the A-B-C type comprising alkanol, polyethylene oxide and polypropylene oxide. Suitable polyelectrolytes are polyacids or polybases. Examples of polyacids are alkali metal salts of polyacrylic acid. Examples of polybases are polyvinylamines or polyethyleneamines.
The composition according to the invention can comprise various amounts of surface-active substances and surfactants. It can comprise from 0.1 to 40% by weight, preferably from 1 to 30 and in particular from 2 to 20% by weight total amount of surface-active substances and surfactants, based on the total amount of the agrochemical formulation according to the second aspect of the present invention.
Examples of adjuvants are organically modified polysiloxanes such as BreakThruS 240®; alcohol alkoxylates such as Atplus® 245, Atplus® MBA 1303, Plurafac® LF and Lutensol® ON; EO/PO block polymers, for example Pluronic® RPE 2035 and Genapol® B; alcohol ethoxylates, for example Lutensol® XP 80; and sodium dioctylsulfosuccinate, for example Leophen® RA.
Examples of thickeners (i.e. compounds which impart to the composition a modified flow behavior, i.e. high viscosity at rest and low viscosity in motion) are polysaccharides and organic and inorganic layer minerals such as xanthan gum (Kelzan®, CP Kelco), Rhodopol® 23 (Rhodia) or Veegum® (R.T. Vanderbilt) or Attaclay® (Engelhard Corp.).
Examples of suitable antifreeze agents are ethylene glycol, propylene glycol, urea and glycerol.
Examples of antifoams are silicone emulsions (such as, for example Silikon® SRE, Wacker, Germany or Rhodorsil®, Rhodia, France), long-chain alcohols, fatty acids, salts of fatty acids, organofluorine compounds and their mixtures.
Examples of colorants are both pigments, which are sparingly soluble in water, and dyes, which are soluble in water. Examples which may be mentioned are the dyes and pigments known by the names Rhodamin B, C. I. Pigment Red 112 and C. I. Solvent Red 1, Pigment Blue 15:4, Pigment Blue 15:3, Pigment Blue 15:2, Pigment Blue 15:1, Pigment Blue 80, Pigment Yellow 1, Pigment Yellow 13, Pigment Red 48:2, Pigment Red 48:1, Pigment Red 57:1, Pigment Red 53:1, Pigment Orange 43, Pigment Orange 34, Pigment Orange 5, Pigment Green 36, Pigment Green 7, Pigment White 6, Pigment Brown 25, Basic Violet 10, Basic Violet 49, Acid Red 51, Acid Red 52, Acid Red 14, Acid Blue 9, Acid Yellow 23, Basic Red 10, Basic Red 108. Examples of stickers are polyvinylpyrrolidone, polyvinyl acetate, polyvinyl alcohol and cellulose ethers (Tylose®, Shin-Etsu, Japan).
Bait materials which are generally used are vegetable or animal foodstuffs and feedstuffs. Suitable examples are coarse cereal meals, cereal grains, flake cereals or cereal meals (for example of oats, wheat, barley, maize, soya, rice), flaked coconut, ground coconut, sugar syrups (for example obtained by hydrolyzing starch (glucose syrup), invert sugar syrup, beet sugar syrup, maple syrup), sugars (for example sucrose, lactose, fructose, glucose), grated nuts, ground nuts (for example hazelnut, walnut, almond), vegetable fat/oils (for example rapeseed oil, soya fat, sunflower oil, cocoa butter, peanut oil, peanut butter, corn oil), animal fats/oils (butter, lard, fish oil), proteins (for example dried skimmed milk, dried egg, protein hydrolyzates) and minerals (for example common salt).
Examples of attractants are pheromones, yeast, ground shell fish, fecal matter, berries, chocolate, fishmeal, meat, black pepper and flavor enhancers such as glutamates, in particular sodium glutamate and disodium glutamate.

In a preferred embodiment of the agrochemical formulation according to the second aspect of the invention, the agrochemical formulation comprises the at least one unbranched C3 to C10 alkanediol or any mixture thereof, preferably 1,2-pentanediol, 1,2-octanediol or any mixture thereof, in a concentration of from 0.01 to 3 wt.%, more preferably of from 0.05 to 1.8 wt.%, even more preferably of from 0.1 to 1.2 wt.%, and yet even more preferably of from 0.08 to 0.8 wt.%, which wt.% is expressed with regard to the total weight of the agrochemical formulation. In a preferred embodiment, the agrochemical formulation comprises the at least one said monosubstituted hydroxyl- or keto- or carboxy- C2-C4 phenylalkane in a concentration of from 0.01 to 2 wt.%, more preferably of from 0.02 to 1.5 wt.%, even more preferably of from 0.03 to 1 wt.%, and yet even more preferably of from 0.05 to 0.7 wt.%, which wt.% is expressed with regard to the total weight of the agrochemical formulation. In a preferred embodiment, the agrochemical formulation comprises said at least one organic acid, in which the agrochemical formulation comprises said at least one organic acid in a concentration of from 0.01 to 0.8 wt.%, more preferably of from 0.05 to 0.5 wt.% and even more preferably of from 0.1 to 0.3 wt.%, which wt.% is expressed with regard to the total weight of the agrochemical formulation. In a preferred embodiment, the agrochemical formulation comprises said at least one preservative selected from a group consisting of alkyl parabens, preferably C1-C4 para-hydroxy benzoates and for example methyl para-hydroxy benzoate and propyl para-hydroxy benzoate, bronopol, isothiazolinones, preferably methyl-2H-isothiazol-3-on (MIT), 1,2-benzisothiazol-3(2H)-on (BIT), chlor-2-methyl-2H-isothiazol-3-on (CMIT) or any mixture thereof, in which the agrochemical formulation comprises said at least one preservative selected from said group in a concentration of from 0.01 to 0.5 wt.%, more preferably of from 0.03 to 0.3 wt.% and even more preferably of from 0.05 to 0.1 wt.%, which wt.% is expressed with regard to the total weight of the agrochemical formulation. In a preferred embodiment, the agrochemical formulation comprises said at least one essential oil or an essential oil isolate or a component thereof, in which the agrochemical formulation comprises said at least one essential oil or an essential oil isolate or a component thereof in a concentration of from 0.01 to 0.5 wt.%, more preferably of from 0.03 to 0.3 wt.% and even more preferably of from 0.05 to 0.1 wt.%, which wt.% is expressed with regard to the total weight of the agrochemical formulation. The above preferred embodiments of preferred concentrations of any of components (i)-(v) can of course be combined in any way, which combinations of preferred concentrations would be especially preferred. Especially, combinations of the preferred embodiments of the concentrations of components (i) and (ii) are preferable.

In a third aspect, the present invention relates to the use of an agrochemical composition blend according to the first aspect of the present invention for preservation of agrochemical formulations.

The use according to the third aspect of the invention employs greener and natural and less hazardous chemical constituents, safer methods of obtaining thereof, safer solvents and reaction conditions, use of the renewable, natural feedstock, reduce derivatives, and less pollution to the environment.
Greener and natural and less hazardous chemical constituents are desired since there is a large interest for the agricultural market to move towards components in the formulated products that are based on natural sourced ingredients to replace the synthetic/petrochemical derived products. These products can be less damaging to the environment, readily biodegradable, sustainable and have improved toxicity profile. Besides, the use of ecocert and organic certified agricultural products is also increasing and is requiring formulants that fall within the definitions for certification or are approved to enable certification for the final application.

In a preferred embodiment of the third aspect of the present invention, said agrochemical composition blend is used for preservation of an agrochemical formulation according to the second aspect of the present invention, by being included in the agrochemical formulation.

In a fourth aspect, the present invention relates to a use of an agrochemical composition blend according to the first aspect of the present invention in recipies or formulations used for controlling phytopathogenic fungi and/or phytopathogenic bacteria and/or undesired plant growth and/or undesired insect or mite attack and/or for regulating the growth of plants.

A variant of the invention relates to processes for controlling phytopathogenic fungi and/or phytopathogenic bacteria and/or unwanted vegetation and/or undesired insect or mite attack where the agrochemical composition blends are mixed with one or more herbicides, insecticides, fungicides, biocides and/or other active pesticide ingredients only shortly before application onto the unwanted vegetation and/or their habitat. According to the invention, "shortly before application" means the agrochemical composition blend and the additional ingredients are mixed preferably less than 6 hours, more preferably less than 3 hours and even more preferably less than 1 hour before application onto the unwanted vegetation and/or their habitat.
It should be understood by a skilled person that said processes for controlling phytopathogenic fungi and/or phytopathogenic bacteria and/or unwanted vegetation and/or undesired insect or mite attack may be directed at any kind of phytopathogenic fungi and/or phytopathogenic bacteria and/or unwanted vegetation and/or undesired insect or mite attack. Some non-limiting examples are bacterial species, belonging to the Proteobacteria, Mollecutes and Actinomycetes, which cause a large number of different plant diseases, some of which are devastating for agricultural crops. Some non-limiting examples are bacterial species from the genera: *Erwinia, Pseudomonas, Acidovorax, Ralstonia, Xanthomonas, Corynebacterium, Agrobacterium, Xylella, Arthrobacter, Clavibacter, Streptomyces, Bacillus, Clostridium, Rhodococcus, Rhizobacter, Panotea, Rhizomonas, Serratia, Leifsonia, Staphylococcus, Escherichia* and *Sphingomonas.* Symptoms of bacterial plant diseases are diverse and include necrosis, tissue maceration, wilting, and hyperplasia. Some phytopathogenic bacteria actively move to their host via chemotaxis and enter the plant through natural openings such as stomata and lenticels or wounds caused by insect feeding, fungal infection, or mechanical plant damage. Some non-limiting examples of phytopathogenic fungi are specues from genera *Colletotrichum, Asperigillus, Candida* and *Rhodotorula.* Some non-limiting examples for the insects pests are species from the genera: *Helicoverpa, Bemisia, Tetranychus, Plutella, Spodoptera, Tribolium, Myzus, Aphis, Nilaparvata, Frankliniella, Ceratitis, Cydia, Callosobruchus, Acyrthosiphon, Diaphorina, Tuta, Thrips,* and the like.
Non-limiting examples of one or more types of unwanted vegetation are selected from one or more species of one or more families selected from the group comprising Cyperaceae, Gramineae, Scrophulariaceae, Caryophyllaceae, Euphorbiaceae, Plantaginaceae, Violaceae, Geraniaceae, Malvaceae, Convolvulaceae, Chenopodiaceae, Portulacaceae, Amaranthaceae, Solanaceae, Polygonaceae, Cruciferae, Cucurbitaceae, Molluginacea and Rubiaceae.
In a preferred embodiment of the fourth aspect of the present invention, said formulations or recipies comprise an effective amount of herbicides, insecticides, fungicides, biocides and/or other active pesticide ingredients for controlling phytopathogenic fungi and/or undesired plant growth and/or undesired insect or mite attack and/or for regulating the growth of plants.
In a further preferred embodiment of the use according to the fourth aspect of the present invention, said recipies or formulations are applied by spraying, sprinkling, showering, spritzing, spreading in droplets, watering, atomizing, spattering, dispersing, diffusing, broadcasting and/or douching.

The invention is further described by the following non-limiting example which further illustrates the invention, and is not intended to, nor should it be interpreted to, limit the scope of the invention.

### EXAMPLES

### EXAMPLE 1: ISO 11930 preservative efficacy

The ISO 11930 preservative efficacy test is a method used for personal care products. ISO11 930 method is based on the inoculation of a product with a known concentration of 5 relevant strains of microorganisms, specifically *Staphylococcus aureus, Escherichia coli, Pseudomonas aeruginosa, Candida albicans,* and *Aspergillus brasiliensis.* The remaining concentration of microorganisms is determined at defined intervals, 7, 14, 28 days. For each time and each microorganism, the log reduction or percent reduction is calculated and compared to the criteria required by the method for acceptable preservation.

The ISO11930 tests have been carried out on biostimulant and plant nutrition products such as fruit extracts, and amino acid blends as well as on solutions containing polysaccharide gums (xanthan gum), and were indicative for an improved efficacy using the combination of alkane diols with phenylpropanol, plant extracts or components thereof, some in the presence of organic acids. Other examples of such biostimulant and plant nutrition products are vegetable extracts. Results of such tests are listed in the following table, indicating "C" for Conform, where ISO 11930 acceptance criteria A has been met, indicating "NC" for Non Conform, where criteria A was not met.
Results of the tests for ISO 11930 efficacy of the agrochemical composition blends of the invention:
1. The effect of adding either 1,2-pentane diol or 1,2-octane diol to products containing BIT showing an improvement for *Aeruginosa* in biostimulant formulations (aminoacids) is shown in Table 1.

**Table 1. The effects of adding either 1,2-pentanediol or 1,2-octanediol to products containing BIT. Meaning of the notes: C: Conform Criteria A, NC: non-Conform Criteria A**

| Preservative packs | pH | Assessment criteria A | | | | |
|---|---|---|---|---|---|---|
| | | *S. aureus* | *P. aeruginosa* | *E. coli* | *C. albicans* | *A. brasiliensis* |
| Unpreserved | 6.19 | NC | NC | NC | NC | NC |
| 0.05 wt.% BIT | 6.20 | C | NC | C | C | C |
| 0.05 wt.% BIT + 0.1 wt.% 1,2 pentanediol | 6.27 | C | C | C | C | C |
| 0.05 wt.% BIT + 0.1 wt.% 1,2 octanediol | 6.29 | C | C | C | C | C |

2. The effect of adding citric acid to a blend containing 1,2-octanediol and 1-phenyl-3-propanol and of the concentration of the preservative blend in biostimulant formulations (aminoacids) and xanthan gum containing solution is shown in Table 2.

**Table 2. The effects of adding citric acid to a blend containing octanediol and phenylpropanol and of the concentration of the preservative blend in biostimulant formulations (aminoacids) and xanthan gum containing solution. Meaning of the notes:**

| Pack A: containing 65% 1,2-octane diol + 35% 3-phenyl-1-propanol | | | | | | |
|---|---|---|---|---|---|---|
| Preservative packs | pH | Assessment criteria A | | | | |
| | | *S. aureus* | *P. aeruginosa* | *E. coli* | *C. albicans* | *A. brasiliensis* |
| Aminoacid blend Unpreserved | 6.19 | NC | NC | NC | NC | NC |
| Aminoacid blend + 0.18 wt.% pack A | 6.22 | NC | NC | NC | NC | C |
| Aminoacid blend + 0.18 wt.% pack A + 0.2 wt.% citric acid | 3.01 | C | C | NC | C | C |
| Aminoacid blend + 0.26 wt.% pack A | 6.25 | C | NC | C | C | C |
| 0.25 wt.% Xanthan gum + Blanco | 6.73 | NC | NC | NC | NC | NC |
| 0.25 wt.% Xanthan gum + 0.18 wt.% Pack A | 6.20 | NC | C | NC | C | NC |
| 0.25 wt.% Xanthan gum + 0.18 wt.% Pack A + 0.2 wt.% citric acid | 2.82 | C | C | C | C | C |
| 0.25 wt.% Xanthan gum + 0.2 wt.% citric acid | 2.83 | C | C | C | NC | NC |

3. The effect of adding phenylpropanol to alkane diols as well as concentration of the preservative packs on a 0,25% Xanthan gum solution is shown in Table 3.

**Table 3. The effects of adding 3-phenyl-1-propanol to alkane diols as well as concentration of the preservative packs on a 0,25% Xanthan gum solution. Meaning of the notes:**

| Pack A: containing 65% 1,2-octane diol + 35% 3-phenyl-1-propanol; Pack B: containing 50% 1,2 Octanediol + 50% 3-phenyl-1-propanol. | | | | | | | | |
|---|---|---|---|---|---|---|---|---|
| Preservativ e packs | pH | concentration | | Assessment criteria A | | | | |
| | | *1,2-octane diol* | *3-phenyl-1-propan ol* | *S. aureu s* | *P. aerugino sa* | *E. coli* | *C. albican s* | *A. brasiliensi s* |
| 0.25 wt.% Xanthan gum unpreserve d | 6.73 | - | - | NC | NC | NC | NC | NC |
| 0,25% Xanthan gum + 0,18% pack A | 6,2 | 0,12 | 0,06 | NC | C | NC | C | NC |
| 0.25 wt.% Xanthan gum + 0.2 wt.% Pack B | 6.50 | 0,1 | 0,1 | NC | NC | NC | C | NC |
| 0.25 wt.% Xanthan gum + 0.3 wt.% Pack B | 6.50 | 0,15 | 0,15 | NC | C | C | C | C |
| 0.25 wt.% Xanthan gum + 0.4 | 6.50 | 0,2 | 0,2 | C | C | C | C | C |
| wt.% Pack B | | | | | | | | |
| 0.25 wt.% Xanthan gum + 0.2 wt.% 1,2-octanediol | 6.50 | 0,2 | - | NC | NC | NC | NC | NC |
| 0.25 wt.% Xanthan gum + 0.2 wt.% 1-phenyl-3-propanol | 6.50 | - | 0,2 | NC | C | NC | C | NC |

4. The effect of adding blends of 1,2-octanediol / 3-phenyl-1-propanol in biostimulant products compared to BIT is shown in Table 4. Meaning of notes: Pack B: containing 50% 1,2-octanediol + 50% 3-phenyl-1-propanol.

**Table 4. The effects of adding blends of 1,2-octanediol / 3-phenyl-1-propanol in biostimulant products compared to BIT.**

| Preservative packs | Assessment criteria A | | | | |
|---|---|---|---|---|---|
| | *S. aureus* | *P. aeruginosa* | *E. coli* | *C. albicans* | *A. brasiliensis* |
| Biostimulant 1 + 0.3 wt.% pack B | C | C | C | C | C |
| Biostimulant 2 + 0.3 wt.% pack B | C | C | C | C | C |
| Biostimulant 3 (unpreserved) | NC | NC | NC | NC | NC |
| Biostimulant 3 + 0.3 wt.% pack B | C | NC | NC | C | C |
| Biostimulant 3 (BIT0.05 wt.%) | C | NC | NC | C | C |

5. The effect of blends of 1,2-octanediol; 1,2-pentane diol and essential oils in biostimulant and xanthan gum containing formulations is shown in Table 5.

**Table 5. The effects of blends of 1,2 octanediol, 1,2-pentane diol and essential oils in biostimulant and xanthan gum containing formulations. Meaning of notes: Pack B: containing 50% 1,2-octanediol + 50% 3-phenyl-1-propanol; Pack E: 1,2-Pentane diol/cassia oil 2:1; Pack F: 1,2-Pentane diol/cassia 1:1; Pack D: 1,2-octanediol/cassia 1:1; Pack G: 1,2-octanediol/cassia 2:1.**

| Preservative packs | Assessment criteria A | | | | |
|---|---|---|---|---|---|
| | *S. aureus* | *P. aeruginosa* | *E. coli* | *C. albicans* | *A. brasiliensis* |
| Biostimulant 1 + 0.2 wt.% pack D | C | C | C | C | C |
| Biostimulant 2 (unpreserved) | NC | NC | NC | NC | NC |
| Biostimulant 2 + 0.3 wt.% pack B | C | NC | NC | C | C |
| Biostimulant 2 + 0.3 wt.% pack E | C | NC | C | C | C |
| Biostimulant 2 + 0.2 wt.% pack F | C | NC | NC | C | C |
| Biostimulant 2 preserved sample (BIT 0.05 wt.%) | C | NC | NC | C | C |
| 0.25 wt.% Xanthan gum +0.2 wt.% pack D | C | C | C | C | C |
| 0.25 wt.% Xanthan gum + 0.15 wt.% pack G | C | C | C | C | C |
| 0.25 wt.% Xanthan gum + 0.2wt.% Eucalyptus oil | NC | NC | NC | NC | C |
| 0.25 wt.% Xanthan gum + 0.1 wt.% Cassia oil | C | C | c | c | c |
| 0.25 wt.% Xanthan gum + 0.2 wt.% Cassia oil | C | C | c | c | c |
| 0.25 wt.% Xanthan gum + 0.2 wt.% Orange peel oil | NC | NC | NC | NC | NC |

### EXAMPLE 2: Screening tests using dip slides for microbiological monitoring in industrial liquids.

A second series of tests was intended as a screening tests using dip slides, commonly known for microbiological monitoring in industrial liquids. The slides that were used, were covered at one side with Nutrient Agar and TTC which supports growth of most common bacteria and at the other side with Rose Bengal Agar supporting growth of yeast and mould.
One or more blend components were added to a solution of 0.25% xanthan gum in water, and thus providing several sample compositions. For an unprotected sample composition, no blend components were added. The compositions were freshly prepared, and the slides were dipped in the compositions. The dips were left at room temperature for a period of 7 days after which the density of the bacterial or mould growth was compared to a model chart provided by the supplier of the dip test.

This series of tests is showing the synergistic effects for preservative blends containing 1,2-octanediol and 1-phenyl-3-propanol into 0,25% xanthan gum solutions. The samples, including the unprotected sample, did not show much evidence of mold growth. Significant bacterial growth was however seen for the unprotected sample, showing reduction of the counts in case of protection with the individual blend components and no bacterial growth for samples containing the blends.

Following combination of products were included in the tests:
(a) 1,2-Octane diol (OD) : 0.2% ; 0.3% ; 0.4%;
(b) 1-Phenyl-3-propanol (PP) : 0.1% ;0.2% ;0.3%;
(c) 1,2-Octane diol with 1-phenyl-3-propanol: at different concentrations and ratios.

**Table 6. Results of screening tests using dip slides for microbiological monitoring of preservative blends in a xanthan gum solution.**

| **Sample number** | **Composition** | **storage temperature** | **dipping on freshly made sample - visual assessment after 7 days (CFU/ mL)** | |
|---|---|---|---|---|
| | 0.25% Xanthan gum in water + | | | |
| | | | **Bacteria** | **Mould** |
| 0 | Unprotected | RT | 1 x 10⁷ | 0 |
| 1 | 0.4% OD | RT | 0 | 0 |
| 2 | 0.3% OD | RT | 1 x 10² | 0 |
| 3 | 0.2% OD | RT | 1 x 10⁴ | 0 |
| 4 | 0.3% OD + 0.1% PP | RT | 0 | 0 |
| 5 | 0.2% OD + 0.1% PP | RT | 0 | 0 |
| 6 | 0.25% OD + 0.05% PP | RT | 0 | 0 |
| 7 | 0.1% OD + 0.2% PP | RT | 0 | 0 |
| 8 | 0.3% PP | RT | 0 | 0 |
| 9 | 0.2% PP | RT | 1 × 10³ | slight |
| 10 | 0.1% PP | RT | 1 × 10³ | 0 |

| | | | | |
|---|---|---|---|---|
| Abbreviations: OD = 1,2-octane diol; PP = 1-phenyl-3-propanol; RT = Room temperature (approximately 20°C); CFU = colony-forming unit | | | | |

It is supposed that the present invention is not restricted to any form of realization described previously and that some modifications can be added to the presented example of fabrication without reappraisal of the appended claims. For example, the present invention has been described referring to specific phytopathogenic microbial strains , but it is clear that the invention can be applied to any bacterial, fungal or yeast strain without departing from the scope of the invention.

### EXAMPLE 3: ISO 11930 preservative efficacy

For Example 3, the same test conditions apply as described above for Example 1. The only difference is that different samples were tested.

In the following, results are provided of tests for ISO 11930 efficacy of agrochemical composition blends of the invention:
1. The effect of adding a preservative pack comprising 1,2-pentanediol and 3-phenyl-1-propanol to a fertilizer blend comprising electrolyte is shown in Table 7; and
2. The effect of adding cinnamaldehyde to 1,2-octanediol in a solution comprising xanthan gum and the comparison to cinnamaldehyde and 1,2-octanediol when used as single components is shown in Table 8.

**Table 7. The effect of adding a preservative pack comprising 1,2-pentanediol and 3-phenyl-1-propanol to a fertilizer blend comprising electrolyte. Meaning of the notes: Pack H: 1,2-pentanediol/3-phenyl-1-propanol 3:2.**

| Preservative packs | Assessment criteria A | | | | |
|---|---|---|---|---|---|
| | *S. Aureus* | *P. Aeruginosa* | *E. Coli* | *C. Albicans* | *A. Brasiliensis* |
| Fertilizer unpreserved | C | C | C | C | NC |
| Fertilizer + 0.25% pack H | C | C | C | C | C |

**Table 8. The effect of adding cinnamaldehyde to 1,2-octanediol in a solution comprising xanthan gum and the comparison to cinnamaldehyde and 1,2-octanediol when used as single components. Meaning of the notes: Pack I: 1,2-octanediol/cinnamaldehyde 3:2; UP: unpreserved.**

| | Concentration (%) | | Assessment criteria A | | | | |
|---|---|---|---|---|---|---|---|
| Preservative packs | 1,2-octane diol | cinna malde hyde | *S. Aureus* | *P. Aerugin osa* | *E. Coli* | *C. Albicans* | *A. Brasiliensi* s |
| 0.25% xanthan gum - UP* | - | - | NC | NC | NC | NC | NC |
| 0.25% xanthan gum + 0.05% Cinnamaldeh yde | - | 0.05 | NC | C | C | C | C |
| 0.25% xanthan gum | - | 0.08 | C | C | C | C | C |
| + 0.08% cinnamaldehy de | | | | | | | |
| 0.25% xanthan gum + 0.2% 1.2-octanediol | 0.2 | - | NC | NC | NC | NC | NC |
| 0.25% xanthan gum + 0.125% pack I | 0.075 | 0.05 | C | C | C | C | C |
| 0.25% xanthan gum + 0.2% pack **I** | 0.12 | 0.08 | C | C | C | C | c |

## Claims

1. Agrochemical composition blend comprising:
(i) at least one unbranched C3 to C10 alkanediol or any mixture thereof, preferably 1,2-pentanediol, 1,2-octanediol or any mixture thereof in a concentration of at least 0.05 wt.%;
(ii) at least one monosubstituted hydroxyl- or keto- or carboxy- C2-C4 phenylalkane represented by a formula (I) 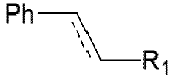 wherein ---- is a single or a double bond, wherein Ph is a phenyl group and wherein R1 is chosen from the group comprising the following substituents - OH, = O, -CH₂-OH, -C= O, -CH₂-C= O, -CH₂-CH₂-OH, -CH₂-COOH, and -COOH and wherein at least one monosubstituted hydroxyl- or keto- or carboxy- C2-C4 phenylalkane is in a concentration of at least 0.05 wt.%;
(iii) optionally at least one organic acid in a concentration of at least 0.01 wt.%;
(iv) optionally at least one preservative selected from a group consisting of alkyl parabens, preferably C1-C4 para-hydroxy benzoates and for example methyl para-hydroxy benzoate and propyl para-hydroxy benzoate, bronopol, isothiazolinones, preferably methyl-2H-isothiazol-3-on (MIT), 1,2-benzisothiazol-3(2H)-on (BIT), chlor-2-methyl-2H-isothiazol-3-on (CMIT) or any mixture thereof in a concentration of at most 0.1 %;
(v) optionally at least one essential oil or an essential oil isolate or a component thereof in a concentration of at least 0.025 wt.%.

2. Agrochemical composition blend according to claim 1, comprising at least two unbranched C3 to C10 alkanediols.

3. Agrochemical composition blend according to claim 2 wherein said unbranched alkanediols are 1,2-pentanediol and 1,2-octanediol.

4. Agrochemical composition blend according to claim 1 wherein said at least one monosubstituted hydroxyl- or keto- or carboxy- C2-C4 phenylalkane is a phenylalcohol.

5. Agrochemical composition blend according to claim 4, wherein said phenylalcohol is 3-phenyl-1-propanol.

6. Agrochemical composition blend according to claim 1 wherein said at least one monosubstituted hydroxyl- or keto- or carboxy- C2-C4 phenylalkane is a phenylalkyl aldehyde.

7. Agrochemical composition blend according to claim 6 wherein said phenylalkyl aldehyde is cinnamaldehyde.

8. Agrochemical composition blend according to any of the previous claims wherein said at least one organic acid is citric acid.

9. Agrochemical composition blend according to any of the previous claims comprising at least one essential oil isolated from the plant species chosen from the group consisting of *Citrus aurantium, Citrus maxima, Citrus reticulata, Cinnamomum verum, Cinnamomum cassia, Eucalyptus globulus, Eucalyptus calmendulensis, Citrus glauca, Melaleuca bracteata, Thymus vulgaris,* and *Citronella sp.*

10. Agrochemical composition blend according to any of the previous claims comprising water in a concentration of at least 0.1 wt.%.

11. Agrochemical formulation, comprising an agrochemical composition blend according to any of claims 1 to 10, and further comprising one or more additional components selected from the group comprising other additives such as herbicides, insecticides, fungicides, biocides or other active pesticide ingredients, safeners, antioxidants, chemical stabilizers, adhesives, fertilizers, perfumes, colorants, liquid carriers, solid carriers, surface-active agents, crystallisation inhibitors, viscosity modifiers, suspending agents, spray droplet modifiers, pigments, foaming agents, light-blocking agents, compatibility agents, antifoam agents, sequestering agents, neutralising agents and buffers, wetting and dispersing agents, preservatives, thickening agents, corrosion inhibitors, freezing point depressants, odorants, spreading agents, emulsifiers, oils, solvents, penetration aids, micronutrients, emollients, lubricants, sticking agents and humectants.

12. Use of an agrochemical composition blend according to any of claims 1 to 10 for preservation of agrochemical formulations.

13. Use of an agrochemical composition blend according to any of claims 1 to 10 in recipies or formulations used for controlling phytopathogenic fungi and/or phytopathogenic bacteria and/or undesired plant growth and/or undesired insect or mite attack and/or for regulating the growth of plants.

14. Use according to claim 13 wherein said recipies or formulations comprise an effective amount of herbicides, insecticides, fungicides, biocides and/or other active pesticide ingredients for controlling phytopathogenic fungi and/or undesired plant growth and/or undesired insect or mite attack and/or for regulating the growth of plants.

15. Use according to claim 13 or 14, wherein said recipies or formulations are applied by spraying, sprinkling, showering, spritzing, spreading in droplets, watering, atomizing, spattering, dispersing, diffusing, broadcasting and/or douching.
